(19)

Europäisches
Patentamt

European
Patent Office

Office européen
des brevets

(11) **EP 3 413 218 A1**

(12) **EUROPEAN PATENT APPLICATION**

(43) Date of publication:
**12.12.2018 Bulletin 2018/50**

(51) Int Cl.:
**G06F 17/30** (2006.01)

(21) Application number: **18176725.2**

(22) Date of filing: **08.06.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.06.2017 US 201762517097 P**
**07.06.2018 PCT/US2018/036467**

(71) Applicant: **Facebook, Inc.**
**Menlo Park, CA 94025 (US)**

(72) Inventors:
• **MILLER, Alexander Holden**
**Menlo Park, CA California 94025 (US)**
• **FISCH, Adam Joshua**
**Menlo Park, CA California 94025 (US)**
• **DODGE, Jesse Dean**
**Menlo Park, CA California 94025 (US)**
• **KARIMI, Amir-Hossein**
**Menlo Park, CA California 94025 (US)**
• **BORDES, Antoine**
**Menlo Park, CA California 94025 (US)**
• **WESTON, Jason E.**
**Menlo Park, CA California 94025 (US)**

(74) Representative: **Schröer, Gernot H.**
**Meissner Bolte Patentanwälte**
**Rechtsanwälte Partnerschaft mbB**
**Bankgasse 3**
**90402 Nürnberg (DE)**

(54) **KEY-VALUE MEMORY NETWORKS**

(57) In one embodiment, a computing system may generate a query vector representation of an input (e.g., a question). The system may generate relevance measures associated with a set of key-value memories based on comparisons between the query vector representation and key vector representations of the keys in the memories. The system may generate an aggregated result based on the relevance measures and value vector representations of the values in the memories. Through an iterative process that iteratively updates the query vector representation used in each iteration, the system may generate a final aggregated result using a final query vector representation. A combined feature representation may be generated based on the final aggregated result and the final query vector representation. The system may select an output (e.g., an answer to the question) in response to the input based on comparisons between the combined feature representation and a set of candidate outputs.

*FIG. 1*

EP 3 413 218 A1

**Description**

## TECHNICAL FIELD

This disclosure generally relates to information retrieval systems designed for answering questions using machine learning.

## BACKGROUND

Question answering (QA) has been a long-standing research problem in natural language processing. For example, it is not a trivial task for a machine to answer a question like, "Where did John drop the ball," based on a body of text that embeds the answer. Early question-answering (QA) systems were based on information retrieval and were designed to return snippets of text containing an answer, with limitations in terms of question complexity and response coverage.

The creation of large-scale knowledge bases (KBs) has led to the development of a new class of QA methods based on semantic parsing that can return precise answers to complicated compositional questions. KBs helped organize information into structured forms, prompting recent progress to focus on answering questions by converting them into logical forms that can be used to query such databases. Unfortunately, KBs often suffer from being too restrictive, as the schema cannot support certain types of answers. Information available in KBs is also too sparse since the information available from which to draw answers must first be processed and enter into the KBs. Thus, even though a corpus of documents (e.g., an Internet-based data source) may include the answer to a question, unless the information in the corpus is entered into the KB, a KB-based QA system would not be able to leverage such information.

Due to the sparsity of KB data, however, the main challenge shifts from finding answers to developing efficient information extraction (IE) methods to populate KBs automatically. Unfortunately, IE-based knowledge sources continue to be limited in scope and limited by the schema used to represent knowledge.

## SUMMARY OF PARTICULAR EMBODIMENTS

Embodiments described herein, which may be referred to as Key-Value Memory Networks, enable a machine to take inputs (e.g., a question, problem, task, etc.) and, in response, generate outputs (e.g., an answer, solution, response to the task, etc.) based on information from a knowledge source. Embodiments of the Key-Value Memory Network model operate a symbolic memory, structured as (key, value) pairs, which gives the model greater flexibility for encoding knowledge sources and helps shrink the gap between directly reading documents and answering from a KB, for example. By being able to encode prior knowledge about the task at hand in the key and value memories, Key-Value Memory Networks have the versatility to analyze, for example, documents, KBs, or KBs built using information extraction, and answer questions about them. Key-Value Memory Networks make reading documents (e.g., Wikipedia pages, web pages on the Internet, books, articles, etc.) more viable by utilizing different encodings in the addressing and output stages of the memory read operation. These models could be applied to storing and reading memories for other tasks and may be applied in other domains as well, such as in a full dialog setting.

The embodiments disclosed herein are only examples, and the scope of this disclosure is not limited to them. Particular embodiments may include all, some, or none of the components, elements, features, functions, operations, or steps of the embodiments disclosed above. Embodiments according to the invention are in particular disclosed in the attached claims directed to a method, a storage medium, a system and a computer program product, wherein any feature mentioned in one claim category, e.g. method, can be claimed in another claim category, e.g. system, as well. The dependencies or references back in the attached claims are chosen for formal reasons only. However, any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

In an embodiment according to the invention, a method may comprise, by a computing device:

receiving an input;
generating a first query vector representation that represents the input;
generating first relevance measures associated with a set of key-value memories that each has an associated key and an associated value, wherein the first relevant measures are generated based on comparisons between the first query vector representation and key vector representations that represent the keys associated with the set of key-value memories;

generating a first aggregated result based on (1) the first relevance measures for the set of key-value memories and (2) value vector representations that represent the values associated with the set of key-value memories;

generating, through an iterative process, a final aggregated result using a final query vector representation, wherein an initial iteration in the iterative process comprises:

generating a second query vector representation based on the first query vector representation, the first aggregated result, and a first machine-learning model;

generating second relevance measures associated with the set of key-value memories using the second query vector representation; and

generating a second aggregated result using the second relevance measures;

generating a combined feature representation based on the final aggregated result and the final query vector representation; and

selecting an output in response to the input based on comparisons between the combined feature representation and a set of candidate outputs.

After the initial iteration, each subsequent iteration of the iterative process may comprise:

generating a current-iteration query vector representation based on (1) an immediately-preceding-iteration query vector representation that is generated in an immediately-preceding iteration, (2) an immediately-preceding-iteration aggregated result that is generated in the immediately-preceding iteration, and (3) a current-iteration machine-learning model;

generating current-iteration relevance measures by comparing the current-iteration query vector representation with the key vector representations; and

generating a current-iteration aggregated result based on the current-iteration relevance measures and the value vector representation.

The first machine-learning model and the current-iteration machine-learning model of each subsequent iteration of the iterative process may be trained using a set of training samples that each comprises a training input and a target output.

The input may be a question and the output may be an answer to the question.

In an embodiment according to the invention, a method may comprise: selecting the set of key-value memories based on the input.

Each of the first query vector representation, the key vector representations, and the value vector representations may be an embedding.

The first query vector representation may be generated using a second machine-learning model and the input; wherein each of the key vector representations may be generated using the second machine-learning model and the associated key; and

wherein each of the value vector representations may be generated using the second machine-learning model and the associated value.

The first machine-learning model and the second machine-learning model may be iteratively trained using a set of training samples that each comprises a training input and a target output;

wherein for each training sample in the set of training samples, the first machine-learning model and the second machine-learning model may be updated based on a comparison between (1) a training output selected in response to the training input of the training sample and (2) the target output of the training sample.

The first machine-learning model or the second machine-learning model may be a matrix generated using a machine learning algorithm.

The first relevance measure for each key-value memory in the set of key-value memories may be a probability.

The first aggregated result may be a weighted sum of the value vector representations weighted by their respective associated first relevance measures.

The set of candidate outputs may each be a vector representation, generated using a second machine-learning model, of an associated candidate text output.

A first key-value memory in the set of key-value memories may be associated with a knowledge base entry that comprises a subject, an object, and a first relation between the subject and the object, wherein the key of the first key-value memory may represent the subject and the first relation, wherein the value of the first key-value memory may represent the object.

The key of a second key-value memory in the set of key-value memories may represent the object and a second relation between the object and the subject, wherein the value of the second key-value memory may represent the subject.

A first key-value memory in the set of key-value memories may be associated with a window of words in a document, wherein the key of the first key-value memory may represent the window of words, wherein the value of the first key-value memory may represent a center word in the window of words.

A second key-value memory in the set of key-value memories may be associated with the window of words in the document, wherein the key of the second key-value memory may represent the window of words, wherein the value of the second key-value memory may represent a title of the document.

In an embodiment according to the invention, one or more computer-readable non-transitory storage media may embody software that is operable when executed to:

>    receive an input;
>    generate a first query vector representation that represents the input;
>    generate first relevance measures associated with a set of key-value memories that each has an associated key and an associated value, wherein the first relevant measures are generated based on comparisons between the first query vector representation and key vector representations that represent the keys associated with the set of key-value memories;
>    generate a first aggregated result based on (1) the first relevance measures for the set of key-value memories and (2) value vector representations that represent the values associated with the set of key-value memories;
>    generate, through an iterative process, a final aggregated result using a final query vector representation, wherein an initial iteration in the iterative process comprises:
>
>>        generate a second query vector representation based on the first query vector representation, the first aggregated result, and a first machine-learning model;
>>        generate second relevance measures associated with the set of key-value memories using the second query vector representation; and
>>        generate a second aggregated result using the second relevance measures;
>>        generate a combined feature representation based on the final aggregated result and the final query vector representation; and
>>        select an output in response to the input based on comparisons between the combined feature representation and a set of candidate outputs.

After the initial iteration, each subsequent iteration of the iterative process may comprise:

>    generate a current-iteration query vector representation based on (1) an immediately-preceding-iteration query vector representation that is generated in an immediately-preceding iteration, (2) an immediately-preceding-iteration aggregated result that is generated in the immediately-preceding iteration, and (3) a current-iteration machine-learning model;
>    generate current-iteration relevance measures by comparing the current-iteration query vector representation with the key vector representations; and
>    generate a current-iteration aggregated result based on the current-iteration relevance measures and the value vector representation.

In an embodiment according to the invention, a system may comprise: one or more processors and one or more computer-readable non-transitory storage media coupled to one or more of the processors and comprising instructions operable when executed by one or more of the processors to cause the system to:

>    receive an input;
>    generate a first query vector representation that represents the input;
>    generate first relevance measures associated with a set of key-value memories that each has an associated key and an associated value, wherein the first relevant measures are generated based on comparisons between the first query vector representation and key vector representations that represent the keys associated with the set of key-value memories;
>    generate a first aggregated result based on (1) the first relevance measures for the set of key-value memories and (2) value vector representations that represent the values associated with the set of key-value memories;
>    generate, through an iterative process, a final aggregated result using a final query vector representation, wherein an initial iteration in the iterative process comprises:

generate a second query vector representation based on the first query vector representation, the first aggregated result, and a first machine-learning model;

generate second relevance measures associated with the set of key-value memories using the second query vector representation; and

generate a second aggregated result using the second relevance measures;

generate a combined feature representation based on the final aggregated result and the final query vector representation; and

select an output in response to the input based on comparisons between the combined feature representation and a set of candidate outputs.

After the initial iteration, each subsequent iteration of the iterative process may comprise:

generate a current-iteration query vector representation based on (1) an immediately-preceding-iteration query vector representation that is generated in an immediately-preceding iteration, (2) an immediately-preceding-iteration aggregated result that is generated in the immediately-preceding iteration, and (3) a current-iteration machine-learning model;

generate current-iteration relevance measures by comparing the current-iteration query vector representation with the key vector representations; and

generate a current-iteration aggregated result based on the current-iteration relevance measures and the value vector representation.

In an embodiment according to the invention, one or more computer-readable non-transitory storage media may embody software that is operable when executed to perform a method according to the invention or any of the above mentioned embodiments.

In an embodiment according to the invention, a system may comprise: one or more processors; and at least one memory coupled to the processors and comprising instructions executable by the processors, the processors operable when executing the instructions to perform a method according to the invention or any of the above mentioned embodiments.

In an embodiment according to the invention, a computer program product, preferably comprising a computer-readable non-transitory storage media, may be operable when executed on a data processing system to perform a method according to the invention or any of the above mentioned embodiments.

## BRIEF DESCRIPTION OF THE DRAWINGS

FIG. 1     illustrates an example of a Key-Value Memory Network model for question answering.

FIG. 2     illustrates an example method for generating an output for a given input using an embodiment of a Key-Value Memory Network model.

FIG. 3     illustrates a block diagram for training an embodiment of a Key-Value Memory Network model.

FIG. 4     illustrates an example network environment associated with a social-networking system.

FIG. 5     illustrates an example computer system.

## DESCRIPTION OF EXAMPLE EMBODIMENTS

Directly reading documents and being able to answer questions from them is an unsolved challenge. To avoid its inherent difficulty, question answering (QA) has been directed towards using Knowledge Bases (KBs) instead, which has proven effective. Each KB entry, for example, may use a predetermined structure, such as *<subject> <relation> <object>* (e.g., Movie X, *directed_by,* Director Name), to represent a particular knowledge. Unfortunately, KBs often suffer from being too restrictive, as the fixed schema cannot support certain types of answers, and too sparse (i.e., incompleteness of information). Since information extraction (IE), intended to fill in missing information in KBs, is neither accurate or reliable enough, collections of raw textual resources and documents (e.g., such as Wikipedia pages) will always contain more information. As a result, even if KBs and IEs can be satisfactory for closed-domain problems, they are unlikely to scale up to answer general questions on any topic.

Starting from this observation, embodiments described herein address the problem of question answering and similar tasks by directly reading documents. Retrieving answers directly from text is harder than from KBs because information is far less structured, is indirectly and ambiguously expressed, and is usually scattered across multiple documents. This explains why using a satisfactory KB-typically only available in closed domains-may under certain circumstances be preferred over raw text. However, as explained above, KBs have significant limitations that makes KB-based solutions unscalable. Embodiments described herein introduces the use of machine learning to bridge the gap between using a KB and reading documents directly.

The Key-Value Memory Network (KV-MemNN), in accordance with particular embodiments described herein, is a neural network architecture that can work with knowledge sources such as KB, IE, and raw text documents. The KV-MemNN may, for example, perform QA tasks by first storing facts/knowledge in a key-value structured memory before reasoning on them in order to predict an answer. The memory may be designed so that the model learns to use keys to address relevant memories with respect to the question, whose corresponding values are subsequently returned. This structure allows the model to encode prior knowledge for the considered task and to leverage possibly complex transforms between keys and values, while still being trained using standard back-propagation via stochastic gradient descent.

In particular embodiments, key-value paired memories are a generalization of the way context (e.g. knowledge bases or documents to be read) are stored in memory. The lookup (addressing) stage may be based on the key memory while the reading stage (giving the returned result) may use the value memory. This gives both (i) greater flexibility for the practitioner to encode prior knowledge about their task; and (ii) more effective power in the model via nontrivial transforms between key and value. The key may be designed with features to help match it to the input (e.g., question), while the value may be designed with features to help match it to the output response (e.g., answer). In particular embodiments, one property of the model is that the entire model can be trained with key-value transforms while still using standard backpropagation via stochastic gradient descent.

High-level descriptions of particular embodiments of the model are as follows. A memory may be defined, which is a possibly very large array of slots (e.g., hundreds or thousands) which can encode both long-term and short-term context. At test time, a query (e.g., the question in QA tasks), may be used to iteratively address and read from the memory (these iterations may be referred to as "hops") looking for relevant information to answer the question. At each step, the collected information from the memory is cumulatively added to the original query to build context for the next round. At the last iteration, the final retrieved context and the most recent query are combined as features to predict a response from a list of candidates.

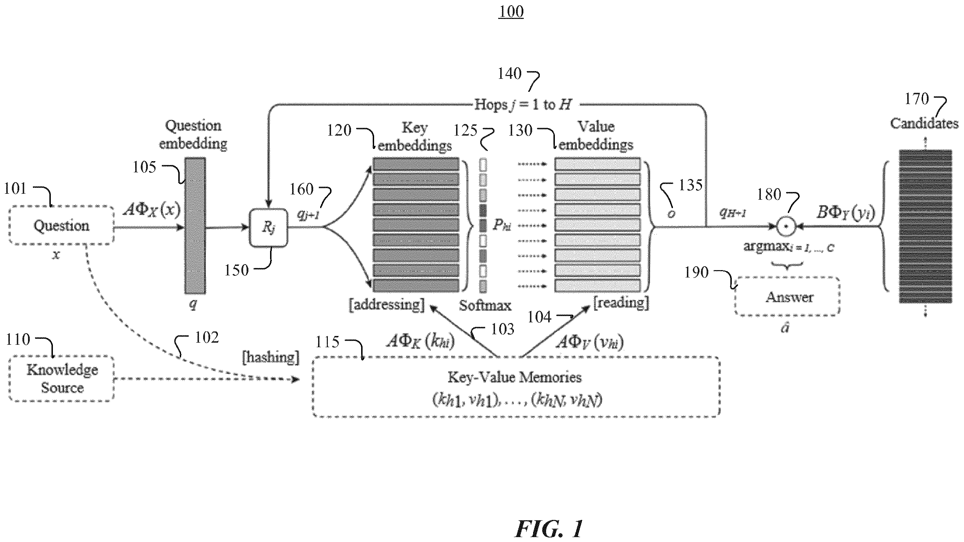

FIG. 1 illustrates an example of a Key-Value Memory Network architecture 100 for question answering. In KV-MemNNs, the memory slots may be defined as pairs of vectors $(k_1, v_1) ... (k_M, v_M)$, and the question (or more generally, the input) may be denoted by $x$ 101. In particular embodiments, the addressing and reading of the memory involves three steps: key hashing 102, key addressing 103, and value reading 104.

In particular embodiments of the key hashing 102 operation, the question $x$ 101 can be used to pre-select a small (e.g., 30, 50, 100) subset 115 of the possibly large array from a knowledge source 110 (e.g., a corpus of documents, KB, IE, etc.). This may be done using an inverted index that finds a subset $(k_{h_1}, v_{h_1}), ... , (k_{h_N}, v_{h_N})$ of memories 115 of size $N$, where each key $k_{h_i}$ shares at least one word with the question $x$ 101 with frequency less than a predetermined threshold (e.g., $F < 50$, 100, or 1000, to ignore stop words such as "the," "is," "at," "which"). It should be appreciated that other, more sophisticated retrieval schemes could be used here as well. Hashing may be important for computational efficiency for large memory sizes. The descriptions below include examples of applications of key-value memories for the task of reading KBs or documents.

In particular embodiments, the memory access process may be conducted by the "controller" neural network using $q = A\Phi_X(x)$ as the query 105. The query $q$ 105, in particular embodiments, may be a vector representation (e.g., a vector of real numbers) that represents the question (or input) $x$ 101. The vector representation, for example, may be an embedding 105 in a certain predetermined dimensional space. The question $x$ 101 may be projected into that embedding space using a machine-learning model $A$ (which may be a matrix that is learned through machine-learning). In particular embodiments, the machine-learning model $A$ may be applied to $x$ 101 directly or to a feature map $\Phi_X(x)$ of the input/question $x$ 101. The feature map $\Phi_X(x)$ may be based on a bag-of-words model of $x$ 101 (e.g., the text in $x$ 101 is represented by a count of the multiplicity of the member unigrams, bigrams, etc.), Latent Semantic Indexing, Latent Dirchlet Allocation, etc. In particular embodiments, $\Phi_X(x)$ may be a feature map of dimension $D$ and the machine-learning model $A$ may be a $d \times D$ matrix.

In particular embodiments, the query $q$ 105 may be used during a key-addressing phase 103. In particular embodiments, the original query that is generated directed from the input $x$ 101, which may be denoted by $q_1$ 105, may be used to address the key-value memories. For the initial addressing 103 by the original query $q_1$ 105, no hops 104 have occurred yet, and therefore no additional contextual information may be added to the query $q_1$ 105 (to be explained in further detail below).

In particular embodiments, during addressing 103, each candidate memory 115 may be assigned a relevance measure 125 (e.g., an addressing probability or weight) by comparing the query $q_1$ 105 to each key of the key-value memories 115. In particular embodiments, the keys of the key-value memories 115 may be represented by corresponding key vector representations 120 (e.g., each key embedding may be in an embedding space of a particular dimensionality). Each key embedding for a key $k_{hi}$ may be represented by $A\Phi_K(k_{hi})$, where $\Phi_K(k_{hi})$ may be a feature map of dimension *D* (e.g., based on a bag-of-words or other numerical representation of the key) and the machine-learning model *A* may be a $d \times D$ matrix. In particular embodiments, the relevance measure $p_{hi}$ 125 for the *i-th* memory 115 may be computed using the following formulation:

$$p_{h_i} = \mathrm{Softmax}\left(A\Phi_X(x) \cdot A\Phi_K(k_{h_i})\right)$$

$$(1)$$

where $\Phi$ are feature maps of dimension *D, A* is a $d \times D$ matrix, and

$$\mathrm{Softmax}(z_i) = e^{z_i} / \sum_j e^{z_j}$$

$$(2)$$

Conceptually, in the embodiment shown, the query $q_1$ 105 (represented in (1) as $A\Phi_X$ (x)) is compared (via the dot-product in equation (1)) to each key vector representation $A\Phi_K(k_{hi})$ to generate the corresponding relevance measures $p_{hi}$ 125.

In particular embodiments, during the value reading phase 104, value vector representations 130 (or value embeddings) of the values of the key-value memories 115 are "read" by taking their weighted sum using the relevance measures 125 (e.g., addressing probabilities) and the aggregated result $o$ 135, which may be a vector, is returned (the aggregated result for the original query $q_1$ may be represented by $o_1$). In particular embodiments, the values of the key-value memories 115 may be represented by corresponding value vector representations 130 (e.g., each value embedding may be in an embedding space of a particular dimensionality). Each value embedding for a value $v_{hi}$ may be represented by $A\Phi_V(v_{hi})$, where $\Phi_V(v_{hi})$ may be a feature map of dimension *D* (e.g., based on a bag-of-words or other numerical representation of the value) and the machine-learning model *A* may be a $d \times D$ matrix. In particular embodiments, the aggregated result $o$ 135 may be computed using the following formulation:

$$o = \sum_i p_{h_i} A\Phi_V(v_{h_i}) \,.$$

$$(3)$$

For ease of reference, the aggregated result 135 of using a query $q_j$ will be denoted $o_j$ (e.g., when $q_1$ is used for addressing, the aggregated result 135 will be denoted $o_1$; when $q_2$ is used, $o_2$ will denote the corresponding aggregated result 135, and so on).

After receiving the result o 135, it may be used to generate a new query $q$ 160 for subsequent addressing. In particular embodiments, an iterative process of, for example, *j=2 to H* hops 140 may be used to iteratively access the memories. During each iteration 140, the query 160 may be updated based on the immediately-preceding iteration's query and associated aggregated result. This may be formulated as: $q_{j+1} = R_j(q_j + o_j)$, where $R_j$ 150 is a machine-learning model (e.g., a $d \times d$ matrix generated using machine learning). For example, after the initial "hopless" step where $q_1$ is used to generate $o_1$, the new query $q_2$ 160 for the first hop iteration may be generated based on $q_2 = R_1(q_1 + o_1)$. The memory access may then be repeated using the new $q_j$ (specifically, only the addressing 103 and reading 104 phases, but not the hashing 102). After each hop or iteration $j$ 140, a different matrix $Rj$ 150 may be used to update the query. The key addressing equation may be transformed accordingly to use the updated query:

$$p_{h_i} = \mathrm{Softmax}(q_{j+1}^\top A\Phi_K(k_{h_i})) \,.$$

$$(4)$$

The motivation for this is that new evidence may be combined into the query to focus on and retrieve more pertinent information in subsequent accesses.

In particular embodiments, after the final hop *H* 140, the resulting state of the controller would be $q_H$ with a corresponding aggregated result $o_H$. The final $q_H$ and $o_H$ may be used to generate a combined feature representation $q_{H+1}$, using the formulation described above. The combined feature representation $q_{H+1}$ may then be used to compute 180 a final output or prediction 190 over the possible outputs. In particular embodiments, the final output or prediction 190 may be computed 180 based on the following formulation:

$$\hat{a} = \operatorname{argmax}_{i=1,\ldots,C}\operatorname{Softmax}(q_{H+1}^{\top}B\Phi_Y(y_i)) \tag{5}$$

where $y_i$ (with $i$ = 1 to C, the size of the candidate outputs 170) represents the possible candidate outputs 170 (e.g., all or a subset of the entities in the KB, or all or a subset of the possible candidate answer sentences, etc.); $B\Phi_Y(y_i)$ denotes a vector representation (e.g., an embedding in an embedding space) of a particular candidate output $y_i$; $\Phi_Y(y_i)$ denotes a feature map of dimension $D$ (e.g., based on a bag-of-words or other numerical representation of the candidate output $y_i$ 170); $B$ denotes a machine-learning model (e.g., a $d \times D$ matrix trained using machine learning); and Softmax is as defined in Equation (2), above. In particular embodiments, the $d \times D$ matrix $B$ may also be constrained to be identical to $A$. Conceptually, Equation (5) compares the final combined feature representation $q_{H+1}$ to each of the vector representations of the candidate outputs 170 and selects the one that is best matching.

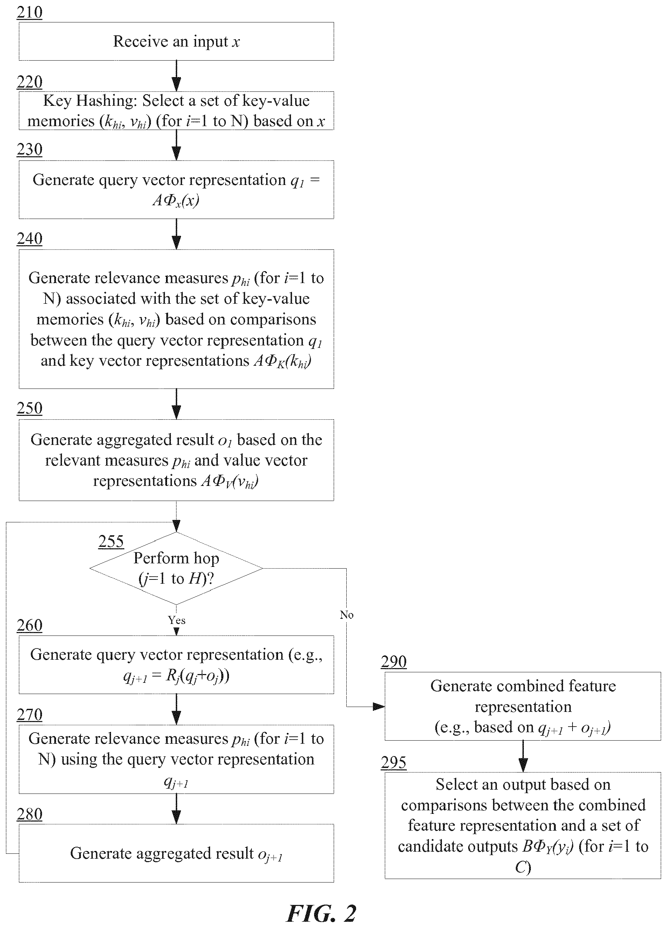

FIG. 2 illustrates an example method for generating an output for a given input $x$ using an embodiment of the Key-Value Memory Network. The method may start at step 210, where a computing system may receive an input, such as a question. The question may be in the form of a text (e.g., "What year was movie $x$ released?"), which may be generated from spoken audio using speech recognition technology. The input may be received by the computing system through a user interface of the system. For example, if the computing system is a mobile device or personal computer, the user interface may be a text interface (e.g., a text field in which the input may be typed) or a speech-recognition engine (e.g., through which the user may provide the desired input through speech). The computing system may also be a server or cloud-based service, in which case the user's local input may be transmitted to the server or cloud for processing.

At step 220, the system may perform the aforementioned key-hashing process, where a set of key-value memories are selected based on the input. For example, an inverted index may be used to identify a subset of key-value memories from a larger set associated with a knowledge source (e.g., Wikipedia or other databases of information) based on words in the input. The hashing process helps reduce the size of the set of key-value memories used, which in turn helps reduce computation cost. As previously discussed, each key-value memory may have an associated key and an associated value. In particular embodiments, the key may represent a question and the associated value may be an answer to that question.

At step 230, the system may generate a query vector representation $q_1$ that represents the input $x$. The query vector representation may be a series of numbers with a predetermined length (in other words, the vector may be in a $d$ dimensional space). For example, the query vector representation may be an embedding. In particular embodiments, the query vector representation may be generated by first generating a numerical feature representation of the input text using a feature map $\Phi_X$, which may be based on a bag-of-words representation (e.g., the multiplicity of each word appearing in the input is counted) or any other suitable representation. The numerical feature representation may then be transformed into a query vector representation using a machine-learning model (e.g., the aforementioned $A$, which may be a transformation matrix generated using a machine-learning algorithm).

At step 240, the system may generate relevance measures associated with the set of key-value memories. The relevant measures may be generated based on comparisons between the query vector representation and key vector representations that represent the keys associated with the set of key-value memories. For example, the relevant measure $p_{hi}$ for the $i$-th key-value memory ($k_{hi}$, $v_{hi}$) may be generated based on a dot-product comparison (or any other comparison algorithm) between the query vector representation (e.g., $q_1$) of the input and a key vector representation of the key $k_{hi}$. Conceptually, the relevance measure may represent a probability of the associated key being the key for the correct value (or answer). Similar to the query vector representation, the key vector representation may be a series of numbers with a predetermined length, such as an embedding. In particular embodiments, the key vector representation for each key may be generated using a machine-learning model and the key. For example, the key vector representation may be generated by first generating a numerical feature representation of the key's text using a feature map $\Phi_K$, which may be based on a bag-of-words representation (e.g., the multiplicity of each word appearing in the input is counted) or any other suitable representation. The feature map $\Phi_K$ used may be the same or different from the feature map $\Phi_X$ used for generating the query vector representation. The numerical feature representation may then be transformed into a key vector representation using a machine-learning model. The machine-learning model used may be the same as the one used for generating the query vector representation (e.g., the aforementioned $A$) or a different one (e.g., during training, the machine-learning model for generating the key vector representation is not restricted to be the same as that of the query vector representation).

At step 250, the system may generate an aggregated result $o_1$ based on the relevance measures for the set of key-value memories (e.g., $p_{hi}$ for each $i$-th key-value memory) and value vector representations that represent the values associated with the set of key-value memories. In particular embodiments, the aggregated result may be a weighted sum or weighted average of the value vector representations weighted by their respective associated relevance measures. For example, the $i$-th value vector representation of the $i$-th key-value memory may be weighted by (e.g.,

multiplied by) the *i-th* relevant measure $p_{hi}$ associated with that key-value memory. The weighted result for each value vector representation may then be aggregated (e.g., summed, averaged, etc.) to generate the aggregated result $o_1$. With respect to the value vector representations, similar to the key vector representations, each value vector representation may be a series of numbers with a predetermined length, such as an embedding. In particular embodiments, the value vector representation for each value may be generated using a machine-learning model and the value. For example, the value vector representation may be generated by first generating a numerical feature representation of the value's text using a feature map $\Phi_V$, which may be based on a bag-of-words representation (e.g., the multiplicity of each word appearing in the input is counted) or any other suitable representation. The feature map $\Phi_V$ used may be the same or different from the feature maps $\Phi_X$ and $\Phi_K$ used for generating the query vector representation and key vector representations, respectively. The numerical feature representation may then be transformed into a value vector representation using a machine-learning model. The machine-learning model used may be the same as the one used for generating the query vector representation (e.g., the aforementioned $A$) and/or the key vector representations, or a different one.

As previously discussed, after the initial aggregated result has been computed, the system may iteratively refine the aggregated result using results obtained from previous iterations. The iterative process is illustrated in FIG. 2 using the loop from step 255 to 280. At step 255, the system may determine whether an iteration is to be performed (e.g., if less than $H$ hops have been performed). In an initial iteration (e.g., $j$ = 2) in the iterative process, the system may, at step 260, generate a second query vector representation $q_2$ based on the initial query vector representation $q_1$, the initial aggregated result $o_1$, and a machine-learning model $R_1$. (which may be a transformation matrix generated using a machine-learning algorithm). At step 270, the system may generate second relevance measures associated with the set of key-value memories using the second query vector representation $q_2$. This is similar to step 240, except that the query vector representation generated in the current iteration is used (e.g., $q2$) to compare with the key vector representations. At step 280, the system may generate an aggregated result $o_2$ using the second relevance measures generated in the current iteration. This is similar to step 250. The iterative process then repeats, starting at step 255, until the designated number of iterations have been performed. For example, after the initial iteration (i.e., after $j$=1), each subsequent iteration of the iterative process may similarly involve generating a current-iteration query vector representation based on (1) an immediately-preceding-iteration query vector representation that is generated in an immediately-preceding iteration, (2) an immediately-preceding-iteration aggregated result that is generated in the immediately-preceding iteration, and (3) a current-iteration machine-learning model $R_j$. The system then generates current-iteration relevance measures by comparing the current-iteration query vector representation with the key vector representations, and then generate a current-iteration aggregated result based on the current-iteration relevance measures and the value vector representation. In particular embodiments, the machine-learning models $R_1$ to $R_H$ may be different but all trained using the same set of training samples (each comprising a training input and a target output) through an end-to-end training process.

Through the iterative process ending with hop $H$, the system would have generated a final aggregated result $o_H$ using a final query vector representation $q_H$. Then at step 290, the system may generate a combined feature representation $q_{H+1}$ based on the final aggregated result $o_H$ and the final query vector representation $q_H$.

At step 295, the system may select an output (e.g., an answer) in response to the input $x$ (e.g., a question) based on comparisons (e.g., dot product or other suitable comparison algorithms) between the combined feature representation and a set of candidate outputs. The candidate output that best matches the combined feature representation may be selected as the output (e.g., the answer to the question). In particular embodiments, the set of candidate outputs are each a vector representation, generated using a machine-learning model, of an associated candidate text output $y_i$. In particular embodiments, each candidate-output vector representation may be an embedding. In particular embodiments, the candidate-output vector representation may be generated by first generating a numerical feature representation of the candidate output's $y_i$ text using a feature map $\Phi_Y$, which may be based on a bag-of-words representation (e.g., the multiplicity of each word appearing in the input is counted) or any other suitable representation. The feature map $\Phi_Y$ used may be the same or different from the feature maps $\Phi_X$, $\Phi_K$ and $\Phi_V$ used for generating the query vector representation, key vector representations, and value vector representations, respectively. The numerical feature representation may then be transformed into a candidate-output vector representation using a machine-learning model (e.g., the aforementioned $B$). The machine-learning model used may be the same as the one used for generating the query vector representation (e.g., the aforementioned $A$) and/or the key vector representations, or a different one.

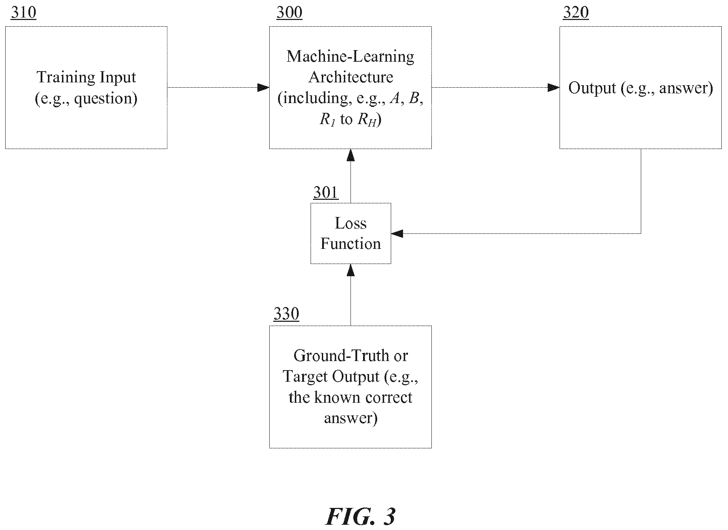

**FIG. 3** illustrates a block diagram for training an embodiment of a Key-Value Memory Network model. In particular embodiments, the whole network may be trained end-to-end, and the model learns to perform the iterative accesses to output the desired target $a$ by minimizing a standard cross-entropy loss between $a^\wedge$ and the correct answer $a$. For example, the machine-learning architecture 300 may include any number of models, including the aforementioned matrices $A, B$ and $R_1, ... , R_H$. The machine-learning models may be trained using a sufficiently large (e.g., 500, 1000, 10000, etc.) number of samples of training input 310. Each training input 310 may include an input (e.g., a question or textual task), similar to the input $x$ described above with reference to FIG. 2. Each training sample may also include a target output 330 (also referred to as the ground truth output), which is the known, correct output for the associated input 310. The machine-learning models may be trained iteratively using the set of training samples. During each training iteration, the models may process the training input 310 of a training sample in the manner described above with reference to FIG. 2 (although the various machine-learning models have not yet been fully trained) to generate a training output 320, which is selected in response to the training input 310 (e.g., an answer to the question). A loss function 301 may then be used to compare the generated training output 320 to the target output 330 (or ground truth), and the result of the comparison may be used to update (e.g., through backpropagation) the models in the machine-learning architecture 300. For example, back propagation and stochastic gradient descent may thus be used to learn the matrices $A$, $B$ and $R_1$ to $R_H$. Once the models have been trained, they may be distributed to and used by any computing system (e.g., client device, cloud-based services, etc.) to automatically answer questions, for example.

One application of the Key-Value Memory Network is to answer questions using information from a variety of knowledge sources, such as documents, knowledge bases, and knowledge bases built by information extraction. As mentioned above, one benefit of the Key-Value Memory Network is the memories' flexibility for accommodating different types of information representations. The manner in which information is stored in key-value memories can have significant effects on overall performance. The ability to encode knowledge is a significant benefit of Key-Value Memory Networks, and particular embodiments provide flexibility for defining feature maps $\Phi_X$, $\Phi_Y$, $\Phi_K$ and $\Phi_V$ for the query, answer, keys and values, respectively. Several possible variants of $\Phi_K$ and $\Phi_V$ tried in experiments are described below. For simplicity $\Phi_X$ and $\Phi_Y$ may be kept fixed as bag-of-words representations, but they could also be represented using other techniques, such as Word2Vec, Latent Semantic Indexing, Latent Dirchlet Allocation, etc.

In particular embodiments, key-value memories may be used to store knowledge base (KB) entries that have a structure of triple "subject *relation* object." Examples of KB entries for the movie *Blade Runner* are shown below:

Blade Runner *directed_by* Ridley Scott
Blade Runner *written_by* Philip K. Dick, Hampton Fancher Blade Runner *starred_actors* Harrison Ford, Sean Young, ... Blade Runner *release_year* 1982 Blade Runner *has_tags* dystopian, noir, police, androids, ...

The representation considered is that the key is composed of the left-hand side entity (subject) and the relation, and the value is the right-hand side entity (object). Particular embodiments may double the KB and consider the reversed relation as well (e.g., there is now two triples "Blade Runner *directed_by* Ridley Scott" and "Ridley Scott *!directed_by* Blade Runner" where *!directed_by* may be a different entry in the dictionary than *directed_by*). In particular embodiments, having the entry both ways round may be important for answering different kinds of questions ("Who directed Blade Runner?" vs. "What did Ridley Scott direct?"). For the typical memory network that does not have key-value pairs, the whole triple has to be encoded into the same memory slot, thus resulting in poorer performance compared to the embodiments described herein.

The key-value memories may also be used to represent a document. As an example, a portion of a document from Wikipedia about the movie *Blade Runner* is shown below:

Blade Runner is a 1982 American neo-noir dystopian science fiction film directed by Ridley Scott and starring Harrison Ford, Rutger Hauer, Sean Young, and Edward James Olmos. The screenplay, written by Hampton Fancher and David Peoples, is a modified film adaptation of the 1968 novel "Do Androids Dream of Electric Sheep?" by Philip K. Dick. The film depicts a dystopian Los Angeles in November 2019 in which genetically engineered replicants, which are visually indistinguishable from adult humans, are manufactured by the powerful Tyrell Corporation as well as by other "mega-corporations" around the world. Their use on Earth is banned and replicants are exclusively used for dangerous, menial, or leisure work on off-world colonies. Replicants who defy the ban and return to Earth are hunted down and "retired" by special police operatives known as "Blade Runners"....

For representing a document, particular embodiments may split it up into sentences, with each memory slot encoding one sentence. In particular embodiments, both the key and the value encode the entire sentence as a bag-of-words (or any other suitable feature representation of the sentence). The key and value may be the same in this case.

In particular embodiments, documents may be split up into windows of W words (e.g., 5, 10, 30, or 50 words, etc.). In particular embodiments, only windows where the center word is an entity (e.g., a person's name, a movie title, a place, a corporation, etc.) may be included. Windows may be represented using bag-of-words, for example. In particular embodiments of Key-Value Memory Networks, the key may be encoded as the entire window and the value as only the center word, which is not possible in the traditional memory network architecture that has no key-value memories. This makes sense because the entire window is more likely to be pertinent as a match for the question (as the key), whereas the entity at the center is more pertinent as a match for the answer (as the value).

In particular embodiments, instead of representing the window as a pure bag-of-words, thus mixing the window center with the rest of the window, they may also be encoded with different features. For example, the size, D, of the dictionary of the bag-of-words representation may be doubled and the center of the window and the value may be encoded using the second dictionary (the first dictionary is used for encoding the rest of the window and the key). This should help the model pick out the relevance of the window center (more related to the answer) as compared to the words either side of it (more related to the question).

The title of a document is commonly the answer to a question that relates to the text it contains. For example, "What did Harrison Ford star in?" can be (partially) answered by the Wikipedia document with the title "Blade Runner." For this reason, a representation in particular embodiments may be defined where the key is the word window as before, but the value is the document title. The standard (window, center) key-value pairs from the window-level representation may be kept as well, thus doubling the number of memory slots in comparison. To differentiate the two keys with different values, an extra feature "_window_" or "_title_" may be added to the key, depending on the value. The "_title_" version may also include the actual movie title in the key. This representation may be combined with center encoding. This representation may be specific to datasets in which there is an apparent or meaningful title for each document.

Experiments have been performed on three forms of knowledge representations: (i) Doc: raw Wikipedia documents consisting of the pages of the movies mentioned; (ii) KB: a classical graph-based KB consisting of entities and relations created from the Open Movie Database (OMDb) and MovieLens; and (iii) IE: information extraction performed on the Wikipedia pages to build a KB in a similar form as (ii). The question-and-answer (QA) pairs may be constructed such that they are all potentially answerable from either the KB from (ii) or the original Wikipedia documents from (i) to eliminate data sparsity issues. However, it should be noted that the advantage of working from raw documents in certain applications is that data sparsity is less of a concern than for a KB, while on the other hand the KB has the information already parsed in a form amenable to manipulation by machines. This dataset can help analyze what methods may be needed to close the gap between all three settings, and in particular what are the useful methods for reading documents when a KB is not available. A sample of the dataset for a Wikipedia document on the movie *Blade Runner* and an associated KB are shown above. Examples of the associated IE entries for *Blade Runner* are shown below:

Blade Runner, Ridley Scott *directed* dystopian, science fiction, film Hampton Fancher *written* Blade Runner
Blade Runner *starred* Harrison Ford, Rutger Hauer, Sean Young...
Blade Runner *labelled* 1982 neo noir special police, Blade *retired* Blade Runner Blade Runner, special police *known* Blade
Example of questions in the dataset are shown below:

Ridley Scott directed which films?
What year was the movie Blade Runner released? Who is the writer of the film Blade Runner?
Which films can be described by dystopian? Which movies was Philip K. Dick the writer of?
Can you describe movie Blade Runner in a few words?

With respect to Doc, in one example a set of Wikipedia articles about movies may be selected by identifying a set of movies from OMDb that had an associated article by title match. The title and the first section (before the contents box) may be kept for each article. This gives ~17k documents (movies) which comprise the set of documents that the models will read from in order to answer questions.

With respect to KB, the set of movies in one example were also matched to the MovieLens dataset. A KB may be built using OMDb and MovieLens metadata with entries for each movie and nine different relation types, e.g., director, writer, actor, release year, language, genre, tags, IMDb rating and IMDb votes, with ~10k related actors, ~6k directors and ~43k entities in total. The KB may be stored as triples, as shown in the examples above. In one example, IMDb ratings and votes are originally real-valued but are binned and converted to text ("unheard of", "unknown", "well known", "highly watched", "famous"). In particular embodiments, KB triples where the entities also appear in the Wikipedia articles are retained to try to guarantee that all QA pairs will be equally answerable by either the KB or Wikipedia document sources.

With respect to IE, as an alternative to directly reading documents, information extraction techniques may be used to transform documents into a KB format in particular embodiments. An IE-KB representation has attractive properties such as more precise and compact expressions of facts and logical key-value pairings based on subject-verb-object groupings. This may come at the cost of lower recall due to malformed or completely missing triplets. In particular embodiments, coreference resolution via the Stanford NLP Toolkit may first be used to reduce ambiguity by replacing pronominal ("he", "it") and nominal ("the film") references with their representative entities. Next the SENNA semantic role labeling tool may be used to uncover the grammatical structure of each sentence and pair verbs with their arguments. Each triplet may be cleaned of words that are not recognized entities, and lemmatization is done to collapse different inflections of important task-specific verbs to one form (e.g., stars, starring, star → starred). Finally, the movie title may be appended to each triple, which improved results.

In particular embodiments, within the dataset's more than 100,000 question-answer pairs, 13 classes of question corresponding to different kinds of edges in the KB may be distinguished. They range in scope from specific-such as actor to movie: "What movies did Harrison Ford star in?" and movie to actors: "Who starred in Blade Runner?"-to more general, such as tag to movie: "Which films can be described by dystopian?". For some question there may be multiple correct answers.

In one example, using an existing open-domain question answering dataset, the subset of questions posed by human annotators that covered our question types were identified. The question set may be created by substituting the entities in those questions with entities from all the KB triples. For example, if the original question written by an annotator was "What movies did Harrison Ford star in?", the following pattern was created, "What movies did [@actor] star in?", which is used to substitute for any other actors in the dataset, and repeat this for all annotations. In particular embodiments, the questions may be split into disjoint training, development and test sets with ~96k, 10k and 10k examples, respectively. In particular embodiments, the same question (even worded differently) cannot appear in both train and test sets. Note that this is much larger than most existing datasets (e.g., the WIKIQA dataset has only ~1000 training pairs).

Experiments have shown that, thanks to its key-value memory, the Key-Value Memory Network consistently outperforms other existing methods (e.g., traditional memory network that has no key-value memories) and attention-based neural network models (e.g., Attentive LSTM and Attentive CNN), and reduces the gap between answering from a human-annotated KB, from an automatically extracted KB, or from directly reading a textual knowledge source (e.g., Wikipedia). Experiments have shown that Key-Value Memory Networks outperform several other methods across different datasets. Using the methods and systems described herein, the gap between all three settings (namely, document, KB, and IE representations) is reduced. Embodiments described herein also achieve state-of-the-art results on the existing WIKIQA benchmark.

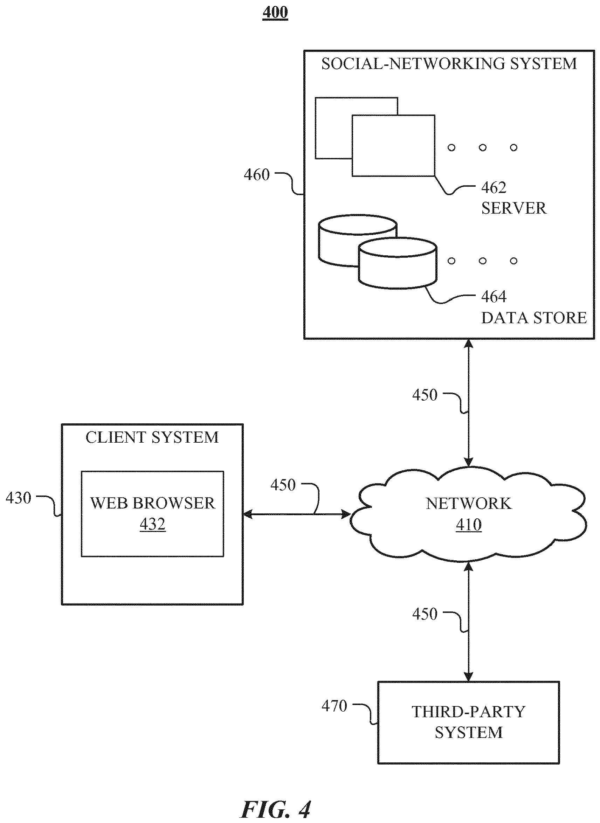

FIG. 4 illustrates an example network environment 400 associated with a social-networking system. Network environment 400 includes a client system 430, a social-networking system 460, and a third-party system 470 connected to each other by a network 410. Although FIG. 4 illustrates a particular arrangement of client system 430, social-networking system 460, third-party system 470, and network 410, this disclosure contemplates any suitable arrangement of client system 430, social-networking system 460, third-party system 470, and network 410. As an example and not by way of limitation, two or more of client system 430, social-networking system 460, and third-party system 470 may be connected to each other directly, bypassing network 410. As another example, two or more of client system 430, social-networking system 460, and third-party system 470 may be physically or logically co-located with each other in whole or in part. Moreover, although FIG. 4 illustrates a particular number of client systems 430, social-networking systems 460, third-party systems 470, and networks 410, this disclosure contemplates any suitable number of client systems 430, social-networking systems 460, third-party systems 470, and networks 410. As an example and not by way of limitation, network environment 400 may include multiple client system 430, social-networking systems 460, third-party systems 470, and networks 410.

This disclosure contemplates any suitable network 410. As an example and not by way of limitation, one or more portions of network 410 may include an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or a combination of two or more of these. Network 410 may include one or more networks 410.

Links 450 may connect client system 430, social-networking system 460, and third-party system 470 to communication network 410 or to each other. This disclosure contemplates any suitable links 450. In particular embodiments, one or more links 450 include one or more wireline (such as for example Digital Subscriber Line (DSL) or Data Over Cable Service Interface Specification (DOCSIS)), wireless (such as for example Wi-Fi or Worldwide Interoperability for Microwave Access (Wi-MAX)), or optical (such as for example Synchronous Optical Network (SONET) or Synchronous Digital Hierarchy (SDH)) links. In particular embodiments, one or more links 450 each include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link 450, or a combination of two or more such links 450. Links 450 need not necessarily be the same throughout network environment 400. One or more first links 450 may differ in one or more respects from one or more second links 450.

In particular embodiments, client system 430 may be an electronic device including hardware, software, or embedded logic components or a combination of two or more such components and capable of carrying out the appropriate functionalities implemented or supported by client system 430. As an example and not by way of limitation, a client system 430 may include a computer system such as a desktop computer, notebook or laptop computer, netbook, a tablet computer, e-book reader, GPS device, camera, personal digital assistant (PDA), handheld electronic device, cellular telephone, smartphone, augmented/virtual reality device, other suitable electronic device, or any suitable combination thereof. This disclosure contemplates any suitable client systems 430. A client system 430 may enable a network user at client system 430 to access network 410. A client system 430 may enable its user to communicate with other users at other client systems 430.

In particular embodiments, client system 430 may include a web browser 432, such as MICROSOFT INTERNET EXPLORER, GOOGLE CHROME or MOZILLA FIREFOX, and may have one or more add-ons, plug-ins, or other extensions, such as TOOLBAR or YAHOO TOOLBAR. A user at client system 430 may enter a Uniform Resource Locator (URL) or other address directing the web browser 432 to a particular server (such as server 462, or a server associated with a third-party system 470), and the web browser 432 may generate a Hyper Text Transfer Protocol (HTTP) request and communicate the HTTP request to server. The server may accept the HTTP request and communicate to client system 430 one or more Hyper Text Markup Language (HTML) files responsive to the HTTP request. Client system 430 may render a webpage based on the HTML files from the server for presentation to the user. This disclosure contemplates any suitable webpage files. As an example and not by way of limitation, webpages may render from HTML files, Extensible Hyper Text Markup Language (XHTML) files, or Extensible Markup Language (XML) files, according to particular needs. Such pages may also execute scripts such as, for example and without limitation, those written in JAVASCRIPT, JAVA, MICROSOFT SILVERLIGHT, combinations of markup language and scripts such as AJAX (Asynchronous JAVASCRIPT and XML), and the like. Herein, reference to a webpage encompasses one or more corresponding webpage files (which a browser may use to render the webpage) and vice versa, where appropriate.

In particular embodiments, social-networking system 460 may be a network-addressable computing system that can host an online social network. Social-networking system 460 may generate, store, receive, and send social-networking data, such as, for example, user-profile data, concept-profile data, social-graph information, or other suitable data related to the online social network. Social-networking system 460 may be accessed by the other components of network environment 400 either directly or via network 410. As an example and not by way of limitation, client system 430 may access social-networking system 460 using a web browser 432, or a native application associated with social-networking system 460 (e.g., a mobile social-networking application, a messaging application, another suitable application, or any combination thereof) either directly or via network 410. In particular embodiments, social-networking system 460 may include one or more servers 462. Each server 462 may be a unitary server or a distributed server spanning multiple computers or multiple datacenters. Servers 462 may be of various types, such as, for example and without limitation, web server, news server, mail server, message server, advertising server, file server, application server, exchange server, database server, proxy server, another server suitable for performing functions or processes described herein, or any combination thereof. In particular embodiments, each server 462 may include hardware, software, or embedded logic components or a combination of two or more such components for carrying out the appropriate functionalities implemented or supported by server 462. In particular embodiments, social-networking system 460 may include one or more data stores 464. Data stores 464 may be used to store various types of information. In particular embodiments, the information stored in data stores 464 may be organized according to specific data structures. In particular embodiments, each data store 464 may be a relational, columnar, correlation, or other suitable database. Although this disclosure describes or illustrates particular types of databases, this disclosure contemplates any suitable types of databases. Particular embodiments may provide interfaces that enable a client system 430, a social-networking system 460, or a third-party system 470 to manage, retrieve, modify, add, or delete, the information stored in data store 464.

In particular embodiments, social-networking system 460 may store one or more social graphs in one or more data stores 464. In particular embodiments, a social graph may include multiple nodes-which may include multiple user nodes (each corresponding to a particular user) or multiple concept nodes (each corresponding to a particular concept)-and multiple edges connecting the nodes. Social-networking system 460 may provide users of the online social network the ability to communicate and interact with other users. In particular embodiments, users may join the online social network via social-networking system 460 and then add connections (e.g., relationships) to a number of other users of social-networking system 460 to whom they want to be connected. Herein, the term "friend" may refer to any other user of social-networking system 460 with whom a user has formed a connection, association, or relationship via social-networking system 460.

In particular embodiments, social-networking system 460 may provide users with the ability to take actions on various types of items or objects, supported by social-networking system 460. As an example and not by way of limitation, the items and objects may include groups or social networks to which users of social-networking system 460 may belong, events or calendar entries in which a user might be interested, computer-based applications that a user may use, transactions that allow users to buy or sell items via the service, interactions with advertisements that a user may perform, or other suitable items or objects. A user may interact with anything that is capable of being represented in social-networking system 460 or by an external system of third-party system 470, which is separate from social-networking system 460 and coupled to social-networking system 460 via a network 410.

In particular embodiments, social-networking system 460 may be capable of linking a variety of entities. As an example and not by way of limitation, social-networking system 460 may enable users to interact with each other as well as receive content from third-party systems 470 or other entities, or to allow users to interact with these entities through an application programming interfaces (API) or other communication channels.

In particular embodiments, a third-party system 470 may include one or more types of servers, one or more data stores, one or more interfaces, including but not limited to APIs, one or more web services, one or more content sources, one or more networks, or any other suitable components, e.g., that servers may communicate with. A third-party system 470 may be operated by a different entity from an entity operating social-networking system 460. In particular embodiments, however, social-networking system 460 and third-party systems 470 may operate in conjunction with each other to provide social-networking services to users of social-networking system 460 or third-party systems 470. In this sense, social-networking system 460 may provide a platform, or backbone, which other systems, such as third-party systems 470, may use to provide social-networking services and functionality to users across the Internet.

In particular embodiments, a third-party system 470 may include a third-party content object provider. A third-party content object provider may include one or more sources of content objects, which may be communicated to a client system 430. As an example and not by way of limitation, content objects may include information regarding things or activities of interest to the user, such as, for example, movie show times, movie reviews, restaurant reviews, restaurant menus, product information and reviews, or other suitable information. As another example and not by way of limitation, content objects may include incentive content objects, such as coupons, discount tickets, gift certificates, or other suitable incentive objects.

In particular embodiments, social-networking system 460 also includes user-generated content objects, which may enhance a user's interactions with social-networking system 460. User-generated content may include anything a user can add, upload, send, or "post" to social-networking system 460. As an example and not by way of limitation, a user communicates posts to social-networking system 460 from a client system 430. Posts may include data such as status updates or other textual data, location information, photos, videos, links, music or other similar data or media. Content may also be added to social-networking system 460 by a third-party through a "communication channel," such as a newsfeed or stream.

In particular embodiments, social-networking system 460 may include a variety of servers, sub-systems, programs, modules, logs, and data stores. In particular embodiments, social-networking system 460 may include one or more of the following: a web server, action logger, API-request server, relevance-and-ranking engine, content-object classifier, notification controller, action log, third-party-content-object-exposure log, inference module, authorization/privacy server, search module, advertisement-targeting module, user-interface module, user-profile store, connection store, third-party content store, or location store. Social-networking system 460 may also include suitable components such as network interfaces, security mechanisms, load balancers, failover servers, management-and-network-operations consoles, other suitable components, or any suitable combination thereof. In particular embodiments, social-networking system 460 may include one or more user-profile stores for storing user profiles. A user profile may include, for example, biographic information, demographic information, behavioral information, social information, or other types of descriptive information, such as work experience, educational history, hobbies or preferences, interests, affinities, or location. Interest information may include interests related to one or more categories. Categories may be general or specific. As an example and not by way of limitation, if a user "likes" an article about a brand of shoes the category may be the brand, or the general category of "shoes" or "clothing." A connection store may be used for storing connection information about users. The connection information may indicate users who have similar or common work experience, group memberships, hobbies, educational history, or are in any way related or share common attributes. The connection information may also include user-defined connections between different users and content (both internal and external). A web server may be used for linking social-networking system 460 to one or more client systems 430 or one or more third-party system 470 via network 410. The web server may include a mail server or other messaging functionality for receiving and routing messages between social-networking system 460 and one or more client systems 430. An API-request server may allow a third-party system 470 to access information from social-networking system 460 by calling one or more APIs. An action logger may be used to receive communications from a web server about a user's actions on or off social-networking system 460. In conjunction with the action log, a third-party-content-object log may be maintained of user exposures to third-party-content objects. A notification controller may provide information regarding content objects to a client system 430. Information may be pushed to a client system 430 as notifications, or information may be pulled from client system 430 responsive to a request received from client system 430. Authorization servers may be used to enforce one or more privacy settings of the users of social-networking system 460. A privacy setting of a user determines how particular information associated with a user can be shared. The authorization server may allow users to opt in to or opt out of having their actions logged by social-networking system 460 or shared with other systems (e.g., third-party system 470), such as, for example, by setting appropriate privacy settings. Third-party-content-object stores may be used to store content objects received from third parties, such as a third-party system 470. Location stores may be used for storing location information received from client systems 430 associated with users. Advertisement-pricing modules may combine social information, the current time, location information, or other suitable information to provide relevant advertisements, in the form of notifications, to a user.

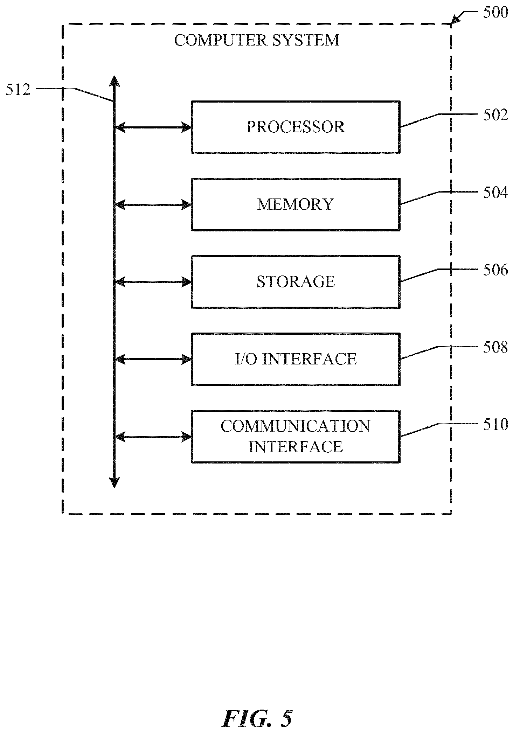

FIG. 5 illustrates an example computer system 500. In particular embodiments, one or more computer systems 500 perform one or more steps of one or more methods described or illustrated herein. In particular embodiments, one or more computer systems 500 provide functionality described or illustrated herein. In particular embodiments, software running on one or more computer systems 500 performs one or more steps of one or more methods described or illustrated herein or provides functionality described or illustrated herein. Particular embodiments in-elude one or more portions of one or more computer systems 500. Herein, reference to a computer system may encompass a computing device, and vice versa, where appropriate. Moreover, reference to a computer system may encompass one or more computer systems, where appropriate.

This disclosure contemplates any suitable number of computer systems 500. This disclosure contemplates computer system 500 taking any suitable physical form. As example and not by way of limitation, computer system 500 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, an augmented/virtual reality device, or a combination of two or more of these. Where appropriate, computer system 500 may include one or more computer systems 500; be unitary or distributed; span multiple locations; span multiple machines; span multiple data centers; or reside in a cloud, which may include one or more cloud components in one or more networks. Where appropriate, one or more computer systems 500 may perform without substantial spatial or temporal limitation one or more steps of one or more methods described or illustrated herein. As an example and not by way of limitation, one or more computer systems 500 may perform in real time or in batch mode one or more steps of one or more methods described or illustrated herein. One or more computer systems 500 may perform at different times or at different locations one or more steps of one or more methods described or illustrated herein, where appropriate.

In particular embodiments, computer system 500 includes a processor 502, memory 504, storage 506, an input/output (I/O) interface 508, a communication interface 510, and a bus 512. Although this disclosure describes and illustrates a particular computer system having a particular number of particular components in a particular arrangement, this disclosure contemplates any suitable computer system having any suitable number of any suitable components in any suitable arrangement.

In particular embodiments, processor 502 includes hardware for executing instructions, such as those making up a computer program. As an example and not by way of limitation, to execute instructions, processor 502 may retrieve (or fetch) the instructions from an internal register, an internal cache, memory 504, or storage 506; decode and execute them; and then write one or more results to an internal register, an internal cache, memory 504, or storage 506. In particular embodiments, processor 502 may include one or more internal caches for data, instructions, or addresses. This disclosure contemplates processor 502 including any suitable number of any suitable internal caches, where appropriate. As an example and not by way of limitation, processor 502 may include one or more instruction caches, one or more data caches, and one or more translation lookaside buffers (TLBs). Instructions in the instruction caches may be copies of instructions in memory 504 or storage 506, and the instruction caches may speed up retrieval of those instructions by processor 502. Data in the data caches may be copies of data in memory 504 or storage 506 for instructions executing at processor 502 to operate on; the results of previous instructions executed at processor 502 for access by subsequent instructions executing at processor 502 or for writing to memory 504 or storage 506; or other suitable data. The data caches may speed up read or write operations by processor 502. The TLBs may speed up virtual-address translation for processor 502. In particular embodiments, processor 502 may include one or more internal registers for data, instructions, or addresses. This disclosure contemplates processor 502 including any suitable number of any suitable internal registers, where appropriate. Where appropriate, processor 502 may include one or more arithmetic logic units (ALUs); be a multicore processor; or include one or more processors 502. Although this disclosure describes and illustrates a particular processor, this disclosure contemplates any suitable processor.

In particular embodiments, memory 504 includes main memory for storing instructions for processor 502 to execute or data for processor 502 to operate on. As an example and not by way of limitation, computer system 500 may load instructions from storage 506 or another source (such as, for example, another computer system 500) to memory 504. Processor 502 may then load the instructions from memory 504 to an internal register or internal cache. To execute the instructions, processor 502 may retrieve the instructions from the internal register or internal cache and decode them. During or after execution of the instructions, processor 502 may write one or more results (which may be intermediate or final results) to the internal register or internal cache. Processor 502 may then write one or more of those results to memory 504. In particular embodiments, processor 502 executes only instructions in one or more internal registers or internal caches or in memory 504 (as opposed to storage 506 or elsewhere) and operates only on data in one or more internal registers or internal caches or in memory 504 (as opposed to storage 506 or elsewhere). One or more memory buses (which may each include an address bus and a data bus) may couple processor 502 to memory 504. Bus 512 may include one or more memory buses, as described below. In particular embodiments, one or more memory management units (MMUs) reside between processor 502 and memory 504 and facilitate accesses to memory 504 requested by processor 502. In particular embodiments, memory 504 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 504 may include one or more memories 504, where appropriate. Although this disclosure describes and illustrates particular memory, this disclosure contemplates any suitable memory.

In particular embodiments, storage 506 includes mass storage for data or instructions. As an example and not by way of limitation, storage 506 may include a hard disk drive (HDD), a floppy disk drive, flash memory, an optical disc, a magneto-optical disc, magnetic tape, or a Universal Serial Bus (USB) drive or a combination of two or more of these. Storage 506 may include removable or non-removable (or fixed) media, where appropriate. Storage 506 may be internal or external to computer system 500, where appropriate. In particular embodiments, storage 506 is non-volatile, solid-state memory. In particular embodiments, storage 506 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 506 taking any suitable physical form. Storage 506 may include one or more storage control units facilitating communication between processor 502 and storage 506, where appropriate. Where appropriate, storage 506 may include one or more storages 506. Although this disclosure describes and illustrates particular storage, this disclosure contemplates any suitable storage.

In particular embodiments, I/O interface 508 includes hardware, software, or both, providing one or more interfaces for communication between computer system 500 and one or more I/O devices. Computer system 500 may include one or more of these I/O devices, where appropriate. One or more of these I/O devices may enable communication between a person and computer system 500. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 508 for them. Where appropriate, I/O interface 508 may include one or more device or software drivers enabling processor 502 to drive one or more of these I/O devices. I/O interface 508 may include one or more I/O interfaces 508, where appropriate. Although this disclosure describes and illustrates a particular I/O interface, this disclosure contemplates any suitable I/O interface.

In particular embodiments, communication interface 510 includes hardware, software, or both providing one or more interfaces for communication (such as, for example, packet-based communication) between computer system 500 and one or more other computer systems 500 or one or more networks. As an example and not by way of limitation, communication interface 510 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 510 for it. As an example and not by way of limitation, computer system 500 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 500 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 500 may include any suitable communication interface 510 for any of these networks, where appropriate. Communication interface 510 may include one or more communication interfaces 510, where appropriate. Although this disclosure describes and illustrates a particular communication interface, this disclosure contemplates any suitable communication interface.

In particular embodiments, bus 512 includes hardware, software, or both coupling components of computer system 500 to each other. As an example and not by way of limitation, bus 512 may include an Accelerated Graphics Port (AGP) or other graphics bus, an Enhanced Industry Standard Architecture (EISA) bus, a frontside bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 512 may include one or more buses 512, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.

**Claims**

1. A method comprising, by a computing device:

   receiving an input;
   generating a first query vector representation that represents the input;
   generating first relevance measures associated with a set of key-value memories that each has an associated key and an associated value, wherein the first relevant measures are generated based on comparisons between the first query vector representation and key vector representations that represent the keys associated with the set of key-value memories;
   generating a first aggregated result based on (1) the first relevance measures for the set of key-value memories and (2) value vector representations that represent the values associated with the set of key-value memories;
   generating, through an iterative process, a final aggregated result using a final query vector representation, wherein an initial iteration in the iterative process comprises:

   generating a second query vector representation based on the first query vector representation, the first aggregated result, and a first machine-learning model;
   generating second relevance measures associated with the set of key-value memories using the second query vector representation; and
   generating a second aggregated result using the second relevance measures;
   generating a combined feature representation based on the final aggregated result and the final query vector representation; and
   selecting an output in response to the input based on comparisons between the combined feature representation and a set of candidate outputs.

2. The method of Claim 1, wherein after the initial iteration, each subsequent iteration of the iterative process comprises:

   generating a current-iteration query vector representation based on (1) an immediately-preceding-iteration query vector representation that is generated in an immediately-preceding iteration, (2) an immediately-preceding-iteration aggregated result that is generated in the immediately-preceding iteration, and (3) a current-iteration machine-learning model;
   generating current-iteration relevance measures by comparing the current-iteration query vector representation with the key vector representations; and
   generating a current-iteration aggregated result based on the current-iteration relevance measures and the value vector representation.

3. The method of Claim 2,
   wherein the first machine-learning model and the current-iteration machine-learning model of each subsequent iteration of the iterative process are trained using a set of training samples that each comprises a training input and a target output.

4. The method of any of Claims 1 to 3, wherein the input is a question and the output is an answer to the question.

**5.** The method of any of Claims 1 to 4, further comprising:
selecting the set of key-value memories based on the input.

**6.** The method of any of Claims 1 to 5, wherein each of the first query vector representation, the key vector representations, and the value vector representations is an embedding.

**7.** The method of any of Claims 1 to 6,
wherein the first query vector representation is generated using a second machine-learning model and the input;
wherein each of the key vector representations is generated using the second machine-learning model and the associated key; and
wherein each of the value vector representations is generated using the second machine-learning model and the associated value;
optionally,
wherein the first machine-learning model and the second machine-learning model are iteratively trained using a set of training samples that each comprises a training input and a target output;
wherein for each training sample in the set of training samples, the first machine-learning model and the second machine-learning model are updated based on a comparison between (1) a training output selected in response to the training input of the training sample and (2) the target output of the training sample; and/or
optionally, wherein the first machine-learning model or the second machine-learning model is a matrix generated using a machine learning algorithm.

**8.** The method of any of Claims 1 to 7, wherein the first relevance measure for each key-value memory in the set of key-value memories is a probability.

**9.** The method of any of Claims 1 to 8, wherein the first aggregated result is a weighted sum of the value vector representations weighted by their respective associated first relevance measures; and/or
wherein the set of candidate outputs are each a vector representation, generated using a second machine-learning model, of an associated candidate text output.

**10.** The method of any of Claims 1 to 9, wherein a first key-value memory in the set of key-value memories is associated with a knowledge base entry that comprises a subject, an object, and a first relation between the subject and the object, wherein the key of the first key-value memory represents the subject and the first relation, wherein the value of the first key-value memory represents the object;
optionally, wherein the key of a second key-value memory in the set of key-value memories represents the object and a second relation between the object and the subject, wherein the value of the second key-value memory represents the subject.

**11.** The method of any of Claims 1 to 10,
wherein a first key-value memory in the set of key-value memories is associated with a window of words in a document, wherein the key of the first key-value memory represents the window of words, wherein the value of the first key-value memory represents a center word in the window of words; optionally, wherein a second key-value memory in the set of key-value memories is associated with the window of words in the document, wherein the key of the second key-value memory represents the window of words, wherein the value of the second key-value memory represents a title of the document.

**12.** One or more computer-readable non-transitory storage media embodying software that is operable when executed to:

receive an input;
generate a first query vector representation that represents the input;
generate first relevance measures associated with a set of key-value memories that each has an associated key and an associated value, wherein the first relevant measures are generated based on comparisons between the first query vector representation and key vector representations that represent the keys associated with the set of key-value memories;
generate a first aggregated result based on (1) the first relevance measures for the set of key-value memories and (2) value vector representations that represent the values associated with the set of key-value memories;
generate, through an iterative process, a final aggregated result using a final query vector representation, wherein an initial iteration in the iterative process comprises:

generate a second query vector representation based on the first query vector representation, the first aggregated result, and a first machine-learning model;

generate second relevance measures associated with the set of key-value memories using the second query vector representation; and

generate a second aggregated result using the second relevance measures;

generate a combined feature representation based on the final aggregated result and the final query vector representation; and

select an output in response to the input based on comparisons between the combined feature representation and a set of candidate outputs.

13. The media of Claim 12, wherein after the initial iteration, each subsequent iteration of the iterative process comprises:

generate a current-iteration query vector representation based on (1) an immediately-preceding-iteration query vector representation that is generated in an immediately-preceding iteration, (2) an immediately-preceding-iteration aggregated result that is generated in the immediately-preceding iteration, and (3) a current-iteration machine-learning model;

generate current-iteration relevance measures by comparing the current-iteration query vector representation with the key vector representations; and

generate a current-iteration aggregated result based on the current-iteration relevance measures and the value vector representation.

14. A system comprising: one or more processors and one or more computer-readable non-transitory storage media coupled to one or more of the processors and comprising instructions operable when executed by one or more of the processors to cause the system to:

receive an input;

generate a first query vector representation that represents the input;

generate first relevance measures associated with a set of key-value memories that each has an associated key and an associated value, wherein the first relevant measures are generated based on comparisons between the first query vector representation and key vector representations that represent the keys associated with the set of key-value memories;

generate a first aggregated result based on (1) the first relevance measures for the set of key-value memories and (2) value vector representations that represent the values associated with the set of key-value memories;

generate, through an iterative process, a final aggregated result using a final query vector representation, wherein an initial iteration in the iterative process comprises:

generate a second query vector representation based on the first query vector representation, the first aggregated result, and a first machine-learning model;

generate second relevance measures associated with the set of key-value memories using the second query vector representation; and

generate a second aggregated result using the second relevance measures;

generate a combined feature representation based on the final aggregated result and the final query vector representation; and

select an output in response to the input based on comparisons between the combined feature representation and a set of candidate outputs.

15. The system of Claim 14, wherein after the initial iteration, each subsequent iteration of the iterative process comprises:

generate a current-iteration query vector representation based on (1) an immediately-preceding-iteration query vector representation that is generated in an immediately-preceding iteration, (2) an immediately-preceding-iteration aggregated result that is generated in the immediately-preceding iteration, and (3) a current-iteration machine-learning model;

generate current-iteration relevance measures by comparing the current-iteration query vector representation with the key vector representations; and

generate a current-iteration aggregated result based on the current-iteration relevance measures and the value vector representation.

**FIG. 1**

EP 3 413 218 A1

210

Receive an input $x$

220

Key Hashing: Select a set of key-value memories ($k_{hi}$, $v_{hi}$) (for $i$=1 to N) based on $x$

230

Generate query vector representation $q_1$ = $A\Phi_x(x)$

240

Generate relevance measures $p_{hi}$ (for $i$=1 to N) associated with the set of key-value memories ($k_{hi}$, $v_{hi}$) based on comparisons between the query vector representation $q_1$ and key vector representations $A\Phi_K(k_{hi})$

250

Generate aggregated result $o_1$ based on the relevant measures $p_{hi}$ and value vector representations $A\Phi_V(v_{hi})$

255

Perform hop ($j$=1 to $H$)?

Yes                                                    No

260

Generate query vector representation (e.g., $q_{j+1}$ = $R_j(q_j+o_j)$)

270

Generate relevance measures $p_{hi}$ (for $i$=1 to N) using the query vector representation $q_{j+1}$

280

Generate aggregated result $o_{j+1}$

290

Generate combined feature representation (e.g., based on $q_{j+1}$ + $o_{j+1}$)

295

Select an output based on comparisons between the combined feature representation and a set of candidate outputs $B\Phi_Y(y_i)$ (for $i$=1 to $C$)

## FIG. 2

310

Training Input
(e.g., question)

300

Machine-Learning
Architecture
(including, e.g., $A$, $B$,
$R_1$ to $R_H$)

320

Output (e.g., answer)

301

Loss
Function

330

Ground-Truth or
Target Output (e.g.,
the known correct
answer)

*FIG. 3*

22

**400**

*FIG. 4*

*FIG. 5*

Europäisches
Patentamt

European
Patent Office

Office européen
des brevets

# EUROPEAN SEARCH REPORT

Application Number

EP 18 17 6725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALEXANDER MILLER ET AL: "Key-Value Memory Networks for Directly Reading Documents", ARXIV.ORG, CORNELL UNIVERSITY LIBRARY, 201 OLIN LIBRARY CORNELL UNIVERSITY ITHACA, NY 14853, 9 June 2016 (2016-06-09), XP080707070, * Section 3.1; figure 1 * ----- | 1-15 | INV. G06F17/30 |

TECHNICAL FIELDS
SEARCHED    (IPC)

G06F

The present search report has been drawn up for all claims

| Place of search | Date of completion of the search | Examiner |
|---|---|---|
| The Hague | 26 July 2018 | Stan, Johann |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HAMPTON FANCHER ; DAVID PEOPLES.** Do Androids Dream of Electric Sheep?. Philip K. Dick, 1968